# EUROPEAN PATENT APPLICATION

(11) **EP 1 852 464 A1**
(43) Date of publication of application: **07.11.2007**
(21) Application number: 07106029.7
(22) Date of filing: 12.04.2007
(51) Int. Cl.: C08K 5/14, C08L 23/16, F16G 5/04, C08K 5/3415

(54) **Elastomeric composition for transmission belt**

(30) Priority: 13.04.2006 US 404490
(71) Applicant: THE GOODYEAR TIRE & RUBBER COMPANY, Akron, Ohio 44316-0001 (US)
(72) Inventor: Burrowes, Thomas George, North Canton, OH 44720 (US)
(74) Representative: Kutsch, Bernd

(57) **Abstract**

Free radical-cured elastomeric compositions comprising (a) an ethylene-alphaolefin elastomer and (b) 1,3-bis(Citraconimidomethyl)benzene as a curative coagent are disclosed. The compositions may further include reinforcing fillers. The invention further includes belts, including vehicle belts, such as transmission belts, and other articles that are subject to dynamic applications, comprising said elastomeric compositions.

## Description

### I. Background of the Invention

### Field of Invention

The present invention relates to elastomeric compositions suitable for use in constructing belting, including power transmission and flat belts, and other articles that are subject to dynamic applications. More particularly, the present invention relates to certain elastomeric compositions that incorporate free-radical cured elastomer blends.

### Description of the Related Art

Due to the widening physical demands placed on vehicle engine belts and the need for such belts to comply with longer warranties, considerable focus has been directed toward improving the material properties of the elastomers comprising such belts. For example, ethylene-alpha-olefin elastomers have substantially replaced polychloroprene as the primary elastomer for automotive serpentine belt applications. By "primary elastomer" it is meant that the ethylene-alpha-olefin elastomers constitute at least 50% by weight of the elastomers used in the elastomeric composition material of the belt or other article. Ethylene-alpha-olefin elastomers, and specifically, ethylene-propylene copolymers (EPM) and ethylene-propylene-diene terpolymers (EPDM), are excellent general purpose elastomers, having broader operating temperature ranges than most other elastomers. Moreover, ethylene-alpha-olefin polymers are generally less expensive than other elastomers, and tolerate high concentrations of filler and oil, which can improve the economic value of using these polymers for a wide variety of applications.

To further improve the characteristics of ethylene-alpha-olefin elastomers based elastomeric compositions for use in dynamic applications, such as power transmission belting, flat belting, air springs, engine mounts and the like, it is known to increase the amounts of reinforcing filler or peroxide to increase hardness and modulus of the cured composition. Moreover, peroxide- or free-radical curing is commonly used in place of sulfur curing to improve heat aging properties, decrease compression set and improve adhesion to treated and untreated textiles, such as reinforcement materials. Additionally, it is known that the incorporation of certain acrylate moieties, namely zinc diacrylate and zinc dimethylacrylate, as coagents for peroxide-curing of elastomeric compositions improves hot tear strength, and promotes abrasion resistance, oil resistance and adhesion to metals. Elastomeric compositions prepared according to these methods, incorporating metal salts of certain alpha-beta-unsaturated organic acids as peroxide co-agents, are taught, for example, in US-B- 5,610,217.

There continues to exist, however, a need for alternative ethylene-alpha-olefin elastomer compositions that exhibit suitable characteristics for use in dynamic applications.

### II. Summary of the Invention

The invention relates to an elastomeric composition according to claim 1 and to an article according to claim 9. Dependent claims refer to preferred embodiments of the invention.

1,3-bis(Citraconimidomethyl)benzene ("1,3 - bCMB") has recently been developed and marketed by Flexsys, under the tradename Perkalink900, as a reversion resistance enhancer for sulfur cure systems. It has been discovered that 1, 3-bCMB offers a suitable, alternative peroxide cure coagent for use with ethylene-alpha-olefin elastomers in the development of elastomeric compositions for use in dynamic applications, such as vehicle belts.

It is an object of the present invention to provide an elastomeric composition for use in articles subject to dynamic loading, comprising ethylene-alpha-olefin elastomers and 1,3-bCMB as a peroxide cure coagent, the composition capable of maintaining excellent abrasion resistance, tensile strength, modulus and adhesion to reinforcement materials under high and low temperature dynamic loading conditions.

More specifically the elastomeric composition may comprise the reaction product of from between 50 and 100 parts by weight of an ethylene-alpha-olefin elastomer and from 0.1 to 30 parts per hundred weight of the elastomer (phr) of 1,3-bCMB. The composition may further comprise from 0 to 250 phr of a reinforcing filler. The composition may additionally include commonly used additive materials such as oils, resins, plasticizers, antioxidants, antiozonants, and the like.

In another aspect of the present invention, an article subject to dynamic loading and incorporating as its primary elastomeric component the elastomeric composition described above, is provided. The article may be power transmission belting, flat belting, air sleeves, or engine mounts.

More specifically, an aspect of the present invention includes improved belting incorporating as its main belt body portion a flex fatigue resistant, abrasion resistant, high tensile strength, high modulus elastomeric composition. The main belt body portion may be prepared from a free-radical cured elastomeric composition, which may be formed by mixing and milling together in accordance with conventional rubber processing practice a mixture comprising, by weight, from 50 to 100 parts by weight of an ethylene-alpha-olefin elastomer which serves as the primary elastomer of the composition, from 0.1 to 30 phr of 1, 3-bCMB, and from 0 to 250 phr of a reinforcing filler. A tensile member may be disposed within the body portion, and a sheave contact portion may be integrated with the main belt body portion.

The ethylene-alpha-olefin elastomeric compositions useful in the present invention may optionally contain other conventional additives that are commonly utilized in elastomer compositions. Such additives may include process and extender oils, antioxidants, waxes, pigments, plasticizers, softeners and the like. These additives may be employed in amounts conventionally used in standard rubber compounds.

Other advantages or objects of the invention will be apparent after reviewing the drawings and descriptions of the preferred embodiments. Although the invention is adaptable to dynamic application uses in general, an endless power transmission belt is shown in detail for illustration purposes.

### III. Brief Description of the Drawings

The invention may take physical form in certain parts and arrangement of parts, a preferred embodiment of which will be described in detail in this specification and illustrated in the accompanying drawings which form a part hereof and wherein:

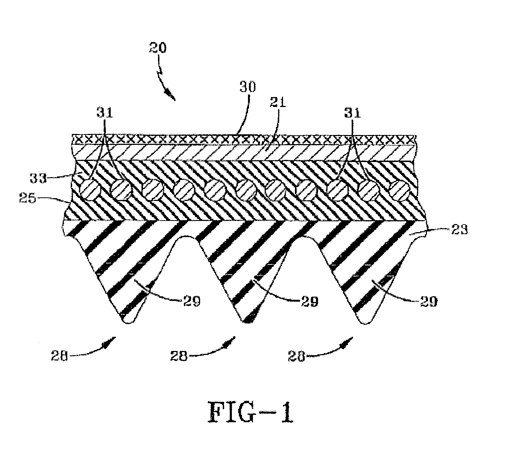

FIGURE 1 is a fragmentary perspective view illustrating one embodiment of an endless power transmission belt of this invention.

### IV. Description of the Preferred Embodiment

Reference is now made to FIG. 1 of the drawings which illustrates an exemplary endless power transmission belt structure or belt, which is designated generally by the reference numeral 20 and which may be constructed substantially with the elastomeric compositions taught herein. The belt 20 shown may be particularly adapted to be used in associated sheaves in accordance with techniques known in the art. The word, "sheave" in this context includes normal pulleys and sprockets used with power transmission belts, and also pulleys, rollers and like mechanisms used with conveyor and flat belting.

The belt 20 includes a tension section 21, a cushion section 23, and a load-carrying section 25 disposed between the tension section 21 and cushion section 23. The belt 20 may optionally have an inside ply or inner fabric layer (not shown), adhered to a drive surface 28 and three or more ribs (or "V's") 29 which may be made of rubber or be fabric-coated. The belt 20 of FIG. 1 may include a fabric backing 30. The fabric backing 30 may be bi-directional, nonwoven, woven or knitted fabric. The fabric-backing layer 30 may be frictioned, dipped, spread, coated or laminated.

The load-carrying section 25 may include load-carrying means in the form of load-carrying cords 31 or filaments which are suitably embedded in an elastomeric cushion or matrix 33 in accordance with techniques which are well known in the art. The cords 31 or filaments may be made of any suitable material known and used in the art. Representative examples of such materials include aramids, fiberglass, nylon, polyester, cotton, steel, carbon fiber and polybenzoxazole.

The drive surface 28 of the belt 20 of FIG. 1 may be multi-V-grooved. In accordance with other embodiments, it is contemplated herein the belts of the present invention also include those belts where the drive surface of the belt may be flat, single V-grooved and synchronous. Representative examples of synchronous include belts having trapezoidal or curvilinear teeth. The tooth design may have a helical offset tooth design such as shown in US-B-5,209,705 and US-B- 5,421,789.

The belt 20 of FIG. 1 may include one drive surface 28. However, it is contemplated herein that the belt may have two drive surfaces (not shown) such as in a double-sided belt. In such an instance, one or both drive surfaces may be with fabric as described herein.

While the present invention is illustrated with reference to the embodiment shown in FIGURE 1, the structure of which is described in US-B-6,855,082, it should be understood that the present invention is not to be limited to these particular embodiments or forms as illustrated but rather is applicable to any dynamic application construction within the scope of the claims as defined below.

The elastomeric compositions for use in the tension section 21, cushion section 23 and load carrying section 25 may be the same or different.

The elastomeric composition, which may be the primary elastomeric composition used in one or more of the tension section 21, cushion section 23 and load carrying section 25, includes an ethylene-alpha-olefin elastomer, which may be the primary elastomer in the elastomeric composition. By "primary elastomeric composition" it is meant the elastomeric composition comprising at least 50% of the total weight of elastomeric materials used in at least one of the tension section 21, cushion section 23 and load carrying section 25. In addition to the ethylene-alpha-olefin elastomer, however, additional rubbers may be used in the elastomeric composition. In one embodiment, from 50 up to 100 parts by weight of the total rubber may be an ethylene-alpha-olefin elastomer. In another embodiment, from 70 to 100 parts by weight may be an ethylene-alpha-olefin elastomer. In still another embodiment, from 90 to 100 parts by weight may be an ethylene-alpha-olefin elastomer.

The ethylene-alpha-olefin elastomer may include copolymers composed of ethylene and propylene units (EPM), ethylene and butene units, ethylene and pentene units or ethylene and octene units (EOM) and terpolymers composed of ethylene and propylene units and an unsaturated component (EPDM), ethylene and butene units and an unsaturated component, ethylene, and pentene units and an unsaturated component, ethylene and octene units and an unsaturated component, as well as mixtures thereof. As the unsaturated component of the terpolymers, any appropriate non-conjugated diene may be used, including, for example, 1,4-hexadiene, dicyclopentadiene or ethylidenenorbomene (ENB). In one embodiment, the ethylene-alpha-olefin elastomer may contain from 35 percent by weight to 90 percent by weight of the ethylene unit, from 65 percent by weight to 10 percent by weight of the propylene or octene unit and additionally from 0 percent by weight to 15 percent by weight of the unsaturated component. In yet another embodiment, the ethylene-alpha-olefin elastomer may contain from 50 percent by weight to 70 percent by weight of the ethylene unit. In still another embodiment, the ethylene-alpha-olefin elastomer may contain from 55 percent by weight to 65 percent by weight of the ethylene unit. The elastomer composition may be cured with an organic peroxide or other free-radical promoting material, optionally in the presence of a minor amount of sulfur in a mixed cure system.

When it is desireable to use a secondary rubber in the primary elastomeric composition in addition to the ethylene alpha olefin elastomer, the secondary rubber may range from zero percent by weight to less than 50 percent by weight, of the total rubber used. In other words, from 0 parts to less than 50 parts by weight of the total rubber may be one or a combination of more than one secondary rubber. By secondary rubber it is meant a non- ethylene alpha olefin elastomer. The secondary rubber may be selected from the group consisting of silicone rubber, polychloroprene, epichlorohydrin, acrylonitrile-butadiene rubber, hydrogenated acrylonitrile-butadiene rubber, zinc salts of unsaturated carboxylic acid ester grafted hydrogenated acrylonitrile-butadiene elastomer, natural rubber, synthetic cis-1,4-polyisoprene, styrene-butadiene rubber, ethylene-vinyl-acetate copolymer, ethylene methacrylate copolymers and terpolymers, chlorinated polyethylene, chlorosulfonated polyethylene, alkylated chlorosulfonated polyethylene, trans-polyoctenamer, polyacrylic rubber, non-acrylated cis-1,4-polybutadiene, and mixtures thereof. According to one embodiment, from zero percent by weight to 30 percent by weight of the total 100 percent by weight of elastomer in the primary elastomeric composition may be one or more of the secondary rubbers listed above.

As noted above, the primary elastomeric composition containing the ethylene-alpha olefin elastomer and, optionally an amount of a secondary rubber or combination of secondary rubbers, may be used in the tension section, cushion section, load carrying section, two of these sections or all three sections. Moreover, however, different elastomeric compositions containing the same or different ethylene-alpha olefin elastomer and the same or different optional secondary rubbers in the same or different amounts may be used in the tension section, cushion section, load carrying section, two of these sections or all three sections.

A free radical crosslinking reaction using a free-radical promoting material is used to cure the elastomeric composition. The reaction may be via UV cure system or peroxide cure system. Well-known classes of peroxides that may be used include diacyl peroxides, peroxyesters, dialkyl peroxides and peroxyketals. Specific examples include dicumyl peroxide, n-butyl-4,4-di(t-butylperoxy) valerate, 1,1-di(t-butylperoxy)-3,3,5-trimethylcyclohexane, 1,1-di(t-butylperoxy) cyclohexane, 1,1-di(t-amylperoxy) cyclohexane, ethyl-3,3-di(t-butylperoxy) butyrate, ethyl-3,3-di(t-amylperoxy) butyrate, 2,5-dimethyl-2,5-di(t-butylperoxy) hexane, t-butyl cumyl peroxide, (α, α'-)bis(t-butylperoxy)diisopropylbenzene, di-t-butyl peroxide, 2,5-dimethyl-2,5-di(t-butylperoxy) hexyne-3, t-butyl perbenzoate, 4-methyl-4-t-butylperoxy-2-pentanone and mixtures thereof. In one embodiment, the peroxide may be 2,5-dimethyl-2,5-di(t-butylperoxy) hexane. Typical amounts of peroxide range from 0.1 to 12 phr (based on active parts of peroxide). The amount of peroxide may, however range from 2 to 6 phr. Sulfur may optionally be added to the organic peroxide curative as part of a mixed cure system in an amount of from 0.01 to 1.0 phr. Ionizing radiation may be used to cure the composition according to methods well known in the art.

A coagent may be present during the free radical crosslinking reaction. Coagents are typically monofunctional and polyfunctional unsaturated organic compounds which are used in conjunction with the free radical initiators to achieve improved vulcanization properties. In the past, organic acrylates, organic methacrylates, metal salts of an alpha-beta unsaturated organic acid and mixtures thereof have been used with some success in improving the material characteristics of cured EPM and EPDM compositions. In the present case, 1,3-bis(Citraconimidomethyl)benzene is used as a coagent in place of or, in other embodiments, in combination with these known coagents. 1,3-bCMB, which is marketed by Flexsys under the trade name Perkalink900, is marketed as a reversion agent for use in sulfur curing systems. Test data reproduced herein compare characteristics of 1,3-bCMB cured elastomeric compositions to compositions cured with known co-agent zinc dimethylacrylate ("ZDMA").

The coagent is present in a range of effective amount. The coagent may be present in an amount ranging from 0.1 to 100 phr. In one embodiment, coagent may be present in an amount ranging from 20 to 60 phr. In an alternate embodiment, the coagent may be present in an amount less than 20 phr, for example, 5 phr or 10 phr.

Conventional carbon blacks may also be present in the elastomeric composition. Such carbon blacks may be used in amounts ranging from 0 to 250 phr. Representative examples of carbon blacks which may be used include those known by their ASTM designations N110, N121, N242, N293, N299, S315, N326, N330, M332, N339, N343, N347, N351, N358, N375, N550, N582, N630, N624, N650, N660, N683, N754, N762, N907, N908, N990 and N991.

Various non-carbon black reinforcing fillers and/or reinforcing agents may be added to increase the strength and integrity of the elastomeric composition, particularly for use in vehicle belts such as transmission belts. Examples of reinforcing agents are silica, talc, calcium carbonate and the like. Such non-carbon black reinforcing agents may be used in amounts of from 0 to 80 phr. In one embodiment, 0 to 20 phr of non-carbon black reinforcing agents may be used in the elastomeric composition.

It is readily understood by those having skill in the art that the elastomeric composition may be compounded by methods generally known in the rubber compounding art, such as mixing the various constituent elastomers with various commonly used additive materials such as, for example, curing aids and processing additives, such as oils, resins, including tackifying resins and plasticizers, fillers, pigments, fatty acid, waxes, antioxidants and antiozonants. The additives mentioned above may be selected and used in conventional amounts.

Tackifier resins, if used, may comprise from 0.1 phr to 10 phr. Processing aids, if used, may comprise 1 phr to 50 phr. Processing aids may include, for example, polyethylene glycol, naphthenic and/or paraffinic processing oils. Antioxidants, if used, may comprise from 1 phr to 5 phr. Representative antioxidants include 1,2-dihydro trimethylquinoline, and zinc dimethyltolyl imidazole. If used, fatty acids, which may include stearic acid, may comprise from 0.5 phr to 3 phr. Waxes may comprise from 1 phr to 5 phr. Plasticizer, if used, may comprise from 1 phr to 100 phr. Representative examples of suitable plasticizers include dioctyl sebacate, chlorinated paraffins.

The elastomer composition may also include fibers or flock, which may be distributed throughout the elastomeric composition. The fibers or flock may be any suitable material and in one embodiment, may be non-metallic fibers such as cotton. In another embodiment, the fibers or flock may be made of a suitable synthetic material include aramid, nylon, polyester, fiberglass, and the like. Each fiber may have a diameter ranging from 0.001 inch to 0.050 inch (0.025 mm to 1.3 mm) and length ranging from 0.001 inch to 0.5 inch (0.025 mm to 12.5 mm). The fibers may be used in an amount ranging from 5 phr to 50 phr.

The mixing of the elastomeric composition may be accomplished by methods known to those having skill in the rubber mixing art. For example, the ingredients may be mixed in one stage. Alternatively, the ingredients may be mixed in at least two stages. In this embodiment, the first stage may be a non-productive stage (of which there may be more than one non-productive stage) and the second stage may be a productive mix stage. The final curatives including vulcanizing agents may be mixed in the second stage which is conventionally called the "productive" mix stage in which the mixing typically occurs at a temperature, or ultimate temperature, lower than the mix temperature(s) than the preceding non-productive mix stage(s).

Curing of the rubber composition for use in the belt may be carried out at conventional temperatures ranging from 160°C to 190°C.

The following examples are submitted for the purpose of further illustrating the nature of the present invention. Parts and percentages referred to in the examples and throughout the specification are by weight unless otherwise indicated.

Twenty-one compositions, comprising six (6) Control compositions and 15 Sample compositions were formulated according to the recipes shown in Tables 1 and 2. Table 1 discloses recipes of the six (6) Control compositions (labeled 1C - 6C) created in the course of three comparative studies. Table 2 discloses recipes of 15 Sample compositions (labeled 01-15) created in the course of the three comparative studies. Test characteristics obtained on the six (6) Control compositions are provided in Table 3. Test characteristics obtained on the 15 Sample compositions are provided in Table 4.

Three comparative studies of the Control and Sample compositions were conducted: the first study compared Control compositions 1C and 2C with Sample compositions 01-04; the second study compared Control compositions 3C and 4C with Sample compositions 05-12; the third study compared Control compositions 5C and 6C with Sample compositions 13-15. The first study provides a useful comparison of elastomeric compositions using known peroxide co-agent zinc dimethyacrylate with elastomeric compositions using 1,3-bCMB as the curing co-agent. The second study provides data illustrating that the desirable characteristics of using 1,3-bCMB are not significantly influenced by the inclusion of zinc oxide. The third study offers further confirmation of the conclusions of the second study. Table 5 provides hot air aging data obtained in a study comparing Control compositions 3C and 4C with Sample Compositions 5-12.

For purposes of developing the control and test sample recipes for the following examples, the following specific components were used:

| | | |
|---|---|---|
| Ethylene Alpha Olefin Elastomer | Royalene 580HT | EPDM commercially available from Chemtura |
| Antioxidant A | Vanox ZMTI | Commercially available from RT Vanderbilt |
| Antioxidant B | Agerite Resin D | Commercially available from RT Vanderbilt |
| Process Oil | Flexon 815 | Commercially available from Esso |
| Lubricant | Molysulfide | Commercially available from Climax Marketing Corp |
| Control Co-Agent Coagent | SR708 | ZDMA commercially available from Sartomer |
| Carbon Black | Sterling NS-1 | Commercially available from Cabot |
| Zinc oxide | Kadox 720C | Commercially available from Horsehead Corp |
| Peroxide (50% active) | Varox DBPH-50 | Commercially available from RT Vanderbilt |
| Test Co-Agent Coagent | Perkalink 900 | 1,3-bCMB commercially available from Flexsys |

**Table 1**

| | **1C** | **2C** | **3C** | **4C** | **5C** | **6C** |
|---|---|---|---|---|---|---|
| Ethylene Alpha Olefin | 100 | 100 | 100 | 100 | 100 | 100 |
| Antioxidant A | 1 | 1 | 1 | 1 | 1 | 1 |
| Antioxidant B | 1 | 1 | 1 | 1 | 1 | 1 |
| Process Oil | 10 | 10 | 10 | 10 | 10 | 10 |
| Lubricant | 5 | 5 | 5 | 5 | 5 | 5 |
| Carbon Black | 40 | 40 | 40 | 40 | 40 | 40 |
| Zinc Oxide | n/a | n/a | n/a | 10 | n/a | n/a |
| | | | | | | |
| Control Coagent | 31 | 10 | 10 | n/a | 10 | n/a |
| Test Coagent | | | | | | |
| Peroxide | 4.4 | 4.4 | 4.4 | 5 | 4.4 | 4 |
| | | | | | | |
| Total phr | 192.4 | 171.4 | 171.4 | 172 | 171.4 | 161 |

| | | | | | | |
|---|---|---|---|---|---|---|
| Table 1- Recipes of 6 Control compositions. "n/a" denotes no amount used. | | | | | | |

**Table 2**

| | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|
| Ethylene Alpha Olefin | 100 | 100 | 100 | 100 | 100 | 100 | 100 | 100 | 100 | 100 | 100 | 100 | 100 | 100 | 100 |
| Antioxidant A | 1 | 1 | 1 | 1 | 1 | 1 | 1 | 1 | 1 | 1 | 1 | 1 | 1 | 1 | 1 |
| Antioxidant B | 1 | 1 | 1 | 1 | 1 | 1 | 1 | 1 | 1 | 1 | 1 | 1 | 1 | 1 | 1 |
| Process Oil | 10 | 10 | 10 | 10 | 10 | 10 | 10 | 10 | 10 | 10 | 10 | 10 | 10 | 10 | 10 |
| Lubricant | 5 | 5 | 5 | 5 | 5 | 5 | 5 | 5 | 5 | 5 | 5 | 5 | 5 | 5 | 5 |
| Carbon Black | 40 | 40 | 40 | 40 | 40 | 40 | 40 | 40 | 40 | 40 | 40 | 40 | 40 | 40 | 40 |
| Zinc oxide | 10 | 10 | 20 | 20 | 3 | 3 | 10 | 10 | 10 | 10 | 3 | 3 | n/a | n/a | n/a |
| Control Coagent | | | | | | | | | | | | | | | |
| Test Coagent | 5 | 10 | 10 | 10 | 0.25 | 0.25 | 0.25 | 0.25 | 5 | 5 | 5 | 5 | 5 | | 5 |
| Peroxide | 4.4 | 4.4 | 4.4 | 6.4 | 2 | 5 | 2 | 5 | 5 | 2 | 5 | 2 | 4 | 4 | 4 |
| | | | | | | | | | | | | | | | |
| Total phr | 176.4 | 181.4 | 191.4 | 193.4 | 162.25 | 169.25 | 169.25 | 172.25 | 177 | 174 | 170 | 167 | 162 | 161 | 166 |

| | | | | | | | | | | | | | | | |
|---|---|---|---|---|---|---|---|---|---|---|---|---|---|---|---|
| Table 2 - Recipes of 15 Sample compositions. | | | | | | | | | | | | | | | |

**Table 3**

| | **1C** | **2C** | **3C** | **4C** | **5C** | **6C** |
|---|---|---|---|---|---|---|
| MDR Test Temp. [F] | 339.9 | 340 | 340 | 340 | 340 | 340 |
| Test Time [min.] | 30 | 30 | 30 | 30 | 30 | 30 |
| ML [dNm] | 1.3 | 1.25 | 1.22 | 1.09 | 1.2 | 1.12 |
| MH [dNm] | 22.86 | 14.72 | 14.01 | 12.77 | 13.8 | 10.01 |
| Ts1 [min.] | 0.55 | 0.63 | 0.64 | 0.89 | 0.65 | 1.23 |
| T90 [min.] | 12.72 | 15.3 | 15 | 16.25 | 14.46 | 16.8 |
| S'@t90 [dNm] | 20.7 | 13.37 | 12.73 | 11.6 | 12.54 | 9.12 |
| Rh [dNm/min.] | 6.21 | 3.71 | 3.45 | 2.1 | 3.38 | 1.32 |
| Hardness[Sh.A] | - - | - - | - - | - - | 64 | 56 |
| Tear Strength, Die C 30.0 min./ 340°F | | | | | | |
| Peak Stress [psi] | 218.92 | 189.15 | 203.95 | 143.26 | - - | - - |
| Break Stress [psi] | 216.04 | 187.64 | 202.32 | 142.5 | - - | - - |
| Tensile Test T10 30.0 min./ 340°F | | | | | | |
| Peak Stress [psi] | 2385.6 | 2370.1 | 2422.3 | 1300.9 | 2335.7 | 2135.6 |
| Peak Strain [%] | 358 | 474 | 468 | 397 | 549 | 681 |
| Break Stress [psi] | 2375.8 | 2360.7 | 2413.9 | 1294 | 2329 | 2130 |
| Elongation | 356 | 473 | 467 | 395 | 548 | 681 |
| 5% Mod | 71.5 | 44.5 | 52 | 38.2 | 39.9 | 43.7 |
| 10% Mod | 120.3 | 76.3 | 84 | 64.3 | 76.5 | 69.3 |
| 15% Mod | 157.5 | 98.6 | 109.2 | 83.4 | 103 | 87.5 |
| 20% Mod | 189.7 | 117.7 | 127.6 | 100.8 | 119.7 | 102.1 |
| 25% Mod | 212.2 | 136.7 | 142.8 | 113 | 139.6 | 114.2 |
| 50% Mod | 308.7 | 190.8 | 199.9 | 159.9 | 196.1 | 149.5 |
| 100% Mod | 517.6 | 286.3 | 300.7 | 229.5 | 285.8 | 193.8 |
| 200% Mod | 1176.8 | 657.9 | 671.9 | 472.8 | 618 | 337.8 |
| 300% Mod | 1985.8 | 1255.9 | 1248.1 | 897 | 1099.7 | 601.7 |
| 400% Mod | 0 | 1879.1 | 1849.5 | 0 | 1607.2 | 934 |
| Compression Set 70h/302F/25% | 42.1 | 32.8 | 34.1 | 24.4 | 39.2 | 34.5 |

| | | | | | | |
|---|---|---|---|---|---|---|
| Table 3 - Test characteristics from 6 Control compositions. "- -" denotes data not collected. | | | | | | |

**Table 4**

| | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|
| MDR Test Temp.[F] | 340 | 340 | 339.9 | 340 | 340 | 340 | 339.9 | 339.9 | 340 | 340 | 339.9 | 340 | 340 | 340 | 340 |
| Test Time [min.] | 30 | 30 | 30 | 30 | 30 | 30 | 30 | 30 | 30 | 30 | 30 | 30 | 30 | 30 | 30 |
| ML [dNm] | 1.19 | 1.04 | 1.12 | 1.1 | 1.21 | 1.09 | 1.15 | 1.18 | 1.1 | 1.12 | 1.13 3 | 1.04 | 1.11 | 1.15 | 1.17 |
| MH [dNm] | 17.69 | 18.49 | 20.56 | 24.26 | 7.78 | 12.57 | 7.03 | 13.85 | 18.1 | 12.75 | 18.15 | 11.57 | 15.72 | 11.24 | 16.54 |
| Ts1 [min.] | 1.1 | 1.4 | 1.3 | 1.01 | 1.39 | 0.84 | 1.45 | 0.8 | 1.08 | 2.16 | 1.07 | 2.32 | 1.32 | 1.17 | 1.26 |
| T90 [min.] | 13.79 | 13.94 | 14.36 | 13.37 | 16.87 | 16.4 | 16.92 | 16.43 | 12.61 | 17.07 | 12.81 | 18.13 | 12.58 | 17.29 | 12.55 |
| S'@t90 [dNm] | 16.04 | 16.75 | 18.62 | 21.94 | 7.12 | 11.42 | 6.44 | 12.58 | 16.4 | 11.59 | 16.45 | 10.52 | 14.26 | 10.23 | 15 |
| Rh [dNm/min.] | 3.13 | 1.93 | 2.01 | 3.73 | 1.34 | 2.68 | 1.23 | 2.93 | 3.66 | 0.93 | 3.49 | 0.8 | 2.26 | 1.47 | 2.46 |
| Hardness[Sh.A] | - - | - - | - - | - - | - - | - - | - - | - - | - - | - - | - - | - - | 63 | 57 | 65 |
| Tear Strength, Die C 30.0 min./ 340°F | | | | | | | | | | | | | | | |
| Peak Stress [psi] | 134.17 | 88.96 | 126.71 | 111.3 | 174.19 | 154.18 | 150.77 | 174.3 | 131.98 | 163.9 | 126.99 | 139.96 | - - | - - | - - |
| 3reak Stress [psi] | 132.59 | 87.09 | 124.84 | 108.81 | 168.93 | 153.4 | 111.14 | 173.19 | 130.61 | 163.52 | 125.52 | 139.6 | - - | - - | - - |
| Tensile Test T10 30.0 min./ 340°F | | | | | | | | | | | | | | | |
| Peak Stress [psi] | 1573.2 | 1534.4 | 1495 | 1331.8 | 1250.7 | 2056.4 | 1211.5 | 2028.8 | 1337.5 | 1313.9 | 1022.5 | 1542.6 | 1130.2 | 2155.5 | 1418.3 |
| Peak Strain [%] | 351 | 322 | 297 | 216 | 794 | 486 | 893 | 441 | 302 | 475 | 266 | 586 | 362 | 589 | 389 |
| Break Stress [psi] | 1566.4 | 1526.6 | 1488.4 | 1321.5 | 1247.5 | 2048 | 1204.8 | 2020.4 | 1331.1 | 1310.4 | 1015.1 | 1539.2 | 1123.1 | 2147.9 | 1412.4 |
| Elongation | 350 | 320 | 296 | 215 | 801 | 485 | 894 | 440 | 301 | 474 | 265 | 585 | 361 | 588 | 387 |
| 5% Mod | 55.8 | 56.1 | 65 | 68.7 | 35.4 | 44 | 38.3 | 50.3 | 45 | 49.3 | 49.2 | 57 | 49.8 | 41.1 | 54.4 |
| 10% Mod | 86.4 | 87.8 | 100.8 | 104.8 | 61.1 | 67.4 | 62.6 | 75.4 | 73.9 | 81 | 86.2 | 84.4 | 81.9 | 65.4 | 91.3 |
| 15% Mod | 109.8 | 114 | 126.8 | 134 | 79.4 | 84.2 | 78.3 | 95 | 99.6 | 102.1 | 111.6 | 103.5 | 105 | 84.1 | 114.6 |
| 20% Mod | 130.8 | 134.5 | 146.3 | 159.8 | 93.3 | 99.7 | 90.4 | 109 | 118.9 | 121.4 | 131.9 | 117 | 124.6 | 99.7 | 134 |
| 25% Mod | 145.9 | 153.2 | 169 | 180.4 | 106.1 | 113.2 | 100.9 | 122.9 | 138.2 | 133.7 | 149.5 | 128.5 | 140.6 | 112.1 | 149.5 |
| 50% Mod | 205.3 | 218.6 | 240.5 | 276 | 138.3 | 151 | 130.4 | 167.6 | 199.3 | 175.9 | 212.8 | 166.5 | 188.7 | 149.5 | 203.3 |
| 100% Mod | 311.4 | 340.3 | 394.7 | 498.3 | 164 | 206.1 | 153 | 240.3 | 324.7 | 232.8 | 324.8 | 214 | 268.8 | 195.5 | 287.2 |
| 200% Mod | 687 | 747.5 | 871 | 1153.3 | 234.7 | 429.7 | 207.9 | 533.7 | 739.5 | 405 | 688.5 | 363.6 | 507.3 | 342.5 | 566.1 |
| 300% Mod | 1199.6 | 1373.1 | 0 | 0 | 350.5 | 873.8 | 288.6 | 1031.1 | 1321.4 | 668 | 0 | 591.2 | 872.1 | 626.4 | 963.9 |
| 400% Mod | 0 | 0 | 0 | 0 | 514.5 | 1416.7 | 413.8 | 1699 | 0 | 982.2 | 0 | 863 | 0 | 1033.3 | 0 |
| Compression Set 70h/302F/25% | 17.3 | 17.3 | 16.6 | 15 | 54.7 | 23.4 | 55.9 | 20.7 | 16.5 | 28.5 | 16.1 | 28.4 | 21.5 | 27.8 | 20.3 |

| | | | | | | | | | | | | | | | |
|---|---|---|---|---|---|---|---|---|---|---|---|---|---|---|---|
| Table 4 - Test characteristics from 15 Sample compositions. | | | | | | | | | | | | | | | |

**Table 5**

| | **3C** | **4C** | **5** | **6** | **7** | **8** | **9** | **10** | **11** | **12** |
|---|---|---|---|---|---|---|---|---|---|---|
| Hot air ageing | | | | | | | | | | |
| 70.0 hour/ 275 F | | | | | | | | | | |
| Peak Stress [lbs/in.] | 214.40 | 167.59 | 175.32 | 134.05 | 162.87 | 152.59 | 116.64 | 135.93 | 116.90 | 128.88 |
| Peak Stress [% retention] | 105.10 | 117.00 | 100.60 | 86.90 | 108.00 | 87.50 | 88.40 | 82.90 | 92.10 | 92.10 |
| Break Stress [lbs/in] | 212.76 | 166.55 | 175.32 | 133.34 | 127.43 | 151.43 | 115.41 | 135.53 | 114.92 | 128.37 |
| Break Stress [% retention] | 105.20 | 116.90 | 103.80 | 86.90 | 114.70 | 87.40 | 88.40 | 82.90 | 91.60 | 92.00 |
| | | | | | | | | | | |
| Hot air ageing | | | | | | | | | | |
| 70.0 hour/ 275 F | | | | | | | | | | |
| Peak Stress [psi] | 2216.6 | 1683.7 | 1380.5 | 1930.8 | 1242.0 | 2059.8 | 978.3 | 1387.0 | 1236.2 | 1596.0 |
| Peak Stress [% retention] | 91.50 | 129.40 | 110.40 | 93.90 | 102.50 | 101.50 | 73.10 | 105.60 | 120.90 | 105.50 |
| Peak Strain [%] | 465 | 472 | 849 | 503 | 928 | 489 | 264 | 506 | 299 | 608 |
| Peak Strain [% retention] | 99.40 | 118.90 | 106.90 | 103.50 | 103.90 | 110.90 | 87.40 | 106.50 | 112.40 | 103.80 |
| Break Stress [psi] | 2203.6 | 1674.8 | 1380.5 | 1922.2 | 1242.0 | 2053.8 | 971.8 | 1383.4 | 1228.9 | 1592.2 |
| Break Stress [% retention] | 91.30 | 129.40 | 110.70 | 93.90 | 103.10 | 101.70 | 73.00 | 105.60 | 121.10 | 103.40 |
| Elongation [%] | 464 | 471 | 855 | 501 | 930 | 487 | 263 | 505 | 289 | 607 |
| Elongation [% retention] | 99.40 | 119.20 | 106.70 | 103.30 | 104.00 | 110.70 | 87.40 | 106.50 | 112.50 | 103.80 |
| 5% Mod [psi] | 46.5 | 35.2 | 41.4 | 37.0 | 42.5 | 39.5 | 42.2 | 55.9 | 62.0 | 57.2 |
| 5% Mod [% retention] | 89.40 | 92.10 | 116.90 | 84.10 | 111.00 | 78.50 | 93.80 | 113.40 | 126.00 | 100.40 |
| 10% Mod [psi] | 79.7 | 63.3 | 70.0 | 59.8 | 64.6 | 69.4 | 78.0 | 89.3 | 93.0 | 89.7 |
| 10% Mod [% retention] | 94.90 | 98.40 | 114.60 | 88.70 | 103.20 | 92.00 | 105.50 | 110.20 | 107.90 | 106.30 |
| 15% Mod [psi] | 104.0 | 80.9 | 85.9 | 79.7 | 83.3 | 90.3 | 101.8 | 109.4 | 116.7 | 110.3 |
| 15% Mod [% retention] | 95.20 | 97.00 | 108.20 | 94.70 | 106.40 | 95.10 | 102.20 | 107.10 | 104.60 | 106.60 |
| 20% Mod [psi] | 126.2 | 98.5 | 101.8 | 94.0 | 95.2 | 107.2 | 124.0 | 129.2 | 134.9 | 125.2 |
| 20% Mod [% retention] | 98.90 | 97.70 | 109.10 | 94.30 | 105.30 | 98.30 | 104.30 | 106.40 | 102.30 | 107.00 |
| 25% Mod [psi] | 143.0 | 112.6 | 114.5 | 108.2 | 105.4 | 121.3 | 139.9 | 142.2 | 153.1 | 138.3 |
| 25% Mod [% retention] | 100.10 | 99.60 | 107.90 | 95.60 | 104.50 | 98.70 | 101.20 | 106.40 | 102.40 | 107.60 |
| 50% Mod [psi] | 201.5 | 158.3 | 146.3 | 149.5 | 134.3 | 169.3 | 201.5 | 182.8 | 211.5 | 171.9 |
| 50% Mod [% retention] | 100.80 | 99.00 | 105.80 | 99.00 | 103.00 | 101.00 | 101.10 | 103.90 | 99.40 | 103.20 |
| 100% Mod [psi] | 305.6 | 226.9 | 175.0 | 204.1 | 160.4 | 247.6 | 312.0 | 237.8 | 324.5 | 218.6 |
| 100% Mod [% retention] | 101.60 | 98.90 | 106.70 | 99.00 | 104.80 | 103.00 | 96.10 | 102.10 | 99.90 | 102.10 |
| 200% Mod [psi] | 664.4 | 464.4 | 244.9 | 391.0 | 216.2 | 510.6 | 682.5 | 397.4 | 692.8 | 351.3 |
| 200% Mod [% retention] | 98.90 | 98.20 | 104.30 | 91.00 | 104.00 | 95.70 | 92.30 | 98.10 | 100.60 | 96.60 |
| 300% Mod [psi] | 1222.6 | 868.9 | 365.8 | 747.5 | 310.9 | 933.7 | 0.0 | 640.5 | 0.0 | 567.0 |
| 300% Mod [% retention] | 98.00 | 96.90 | 104.40 | 85.50 | 107.70 | 90.60 | 0.00 | 95.90 | 0.0 | 95.90 |

| | | | | | | | | | | |
|---|---|---|---|---|---|---|---|---|---|---|
| Table 5 - Hot air aging characteristics obtained from Control compositions 3C and 4C versus Sample compositions 5-12. | | | | | | | | | | |

Comparing characteristics of Control compositions 1C and 2C with those of Sample compositions 1-4, indicates that use of 1,3-bCMB as a curative coagent affords improved scorch safety, and compression set resistance (indicative of a high state of cure), while providing comparable cure times and MDR cure states (S'@t90) to ZDMA systems. Comparable low extension modulus values to those with ZDMA are obtainable from the compounds with 1,3-bCMB coagent. The presence of Zinc Oxide in the compound is not required for the 1,3-bCMB coagent to act as an effective part of the cure system.

Comparing characteristics of Control compositions 3C and 4C with those of Sample compositions 5-12, supports the conclusions set forth above on improved scorch safety, and compression set resistance, of the 1,3-bCMB co-agent system over the ZDMA co-agent system. Increasing the level of 1,3-bCMB significantly increased the state of cure resulting in enhanced 10% and 50% modulus values and further improvement in compression set resistance. In this study, as in the study recited above, Zinc Oxide is shown not to be a requirement for the 1,3-bCMB to be effective in this type of compound.

Comparing characteristics of Control compositions 5C and 6C with those of Sample compositions 13-15, once more demonstrates that the 1,3-bCMB co-agent system offers improved scorch safety and compression set resistance (70hr/320F) and shorter cure times over the ZDMA co-agent system, while matching vulcanizate modulus & hardness properties.

## Claims

1. An elastomeric composition comprising the reaction product of a mixture comprising:
(a) from 50 to 100 parts by weight, alternately from 70 to 100 parts by weight, of an ethylene-alpha-olefin elastomer; and
(b) from 0.1 to 100 parts per hundred weight of the ethylene-alpha-olefin elastomer of the curative coagent 1,3-bis(citraconimidomethyl)benzene;
wherein said mixture has been cured using a free-radical promoting material.

2. The elastomeric composition of claim 1 wherein the ethylene-alpha-olefin elastomer is selected from the group consisting of ethylene propylene copolymers, ethylene butene copolymers, ethylene pentene copolymers, ethylene octene copolymers, ethylene propylene diene terpolymers, and mixtures thereof; and
wherein the free-radical promoting material is a peroxide selected from the group consisting of diacyl peroxides, peroxyesters, dialkyl peroxides and peroxyketals.

3. The elastomeric composition of claim 2 wherein the peroxide is selected from the group consisting of dicumyl peroxide, n-butyl-4,4-di(t-butylperoxy) valerate, 1,1-di(t-butylperoxy)-3,3,5-trimethylcyclohexane, 1,1-di(t-butylperoxy) cyclohexane, 1,1-di(t-amylperoxy) cyclohexane, ethyl-3,3-di(t-butylperoxy) butyrate, ethyl-3,3-di(t-amylperoxy) butyrate, 2,5-dimethyl-2,5-di(t-butylperoxy) hexane, t-butyl cumyl peroxide, α, α'-bis(t-butylperoxy) diisopropylbenzene, dit-butyl peroxide, 2,5-dimethyl-2,5-di(t-butylperoxy) hexyne-3, t-butyl perbenzoate, 4-methyl-4-t-butylperoxy-2-pentanone and mixtures thereof.

4. The elastomeric composition of at least one of the previous claims, further comprising from 0 to less than 50 parts by weight, alternately from 5 to 30 parts by weight, of a secondary rubber.

5. The elastomeric composition of claim 4 wherein the secondary rubber is selected from the group consisting of silicone rubber, polychloroprene, epichlorohydrin, acrylonitrile rubber, hydrogenated acrylonitrile-butadiene rubber, zinc salts of unsaturated carboxylic acid ester grafted hydrogenated acrylonitrile-butadiene elastomer, natural rubber, synthetic cis-1,4-polyisoprene, styrene-butadiene rubber, ethylene-vinyl-acetate copolymer, ethylene methacrylate copolymers and terpolymers, chlorinated polyethylene, chlorosulfonated polyethylene, alkylated chlorosulfonated polyethylene, trans-polyoctenamer, polyacrylic rubber, non-acrylated cis-1,4-polybutadiene, and mixtures thereof.

6. The elastomeric composition of at least one of the previous claims comprising from 0.1 to 50 parts per hundred weight of the ethylene-alpha-olefin elastomer, alternately from 0.25 to 20 parts per hundred weight of the ethylene-alpha-olefin elastomer, of 1,3-bis(citraconimidomethyl)benzene.

7. The elastomeric composition of at least one of the previous claims wherein the ethylene-alpha-olefin elastomer is EPM or EPDM.

8. The elastomeric composition of at least one of the previous claims wherein said peroxide is present in an amount ranging from 0.1 to 12 phr.

9. An article subject to dynamic loading selected from the group consisting of power transmission belting, flat belting, air sleeves and engine mounts comprising:
an elastomeric composition cured using a free-radical promoting material, said the elastomeric composition comprising:
(a) from 50 to 100 parts by weight of an ethylene-alpha-olefin elastomer; and
(b) from 0.1 to about 30 parts per hundred weight of the ethylene-alpha-olefin elastomer of 1,3-bis(citraconimidomethyl)benzene.

10. The article of claim 9, wherein the elastomeric composition is the primary elastomeric composition of the article, and/or wherein said article is an endless power transmission belt having a tension section, a cushion section, and a load-carrying section disposed between the tension section and cushion section.

11. The article of claim 9 or 10 wherein the ethylene-alpha-olefin elastomer is selected from the group consisting of ethylene propylene copolymers, ethylene butene copolymers, ethylene pentene copolymers, ethylene octene copolymers, ethylene propylene diene terpolymers, and mixtures thereof; and
wherein the ethylene-alpha-olefin elastomer is blended with up to 50 parts by weight of a secondary rubber selected from the group consisting of silicone rubber, polychloroprene, epichlorohydrin, acrylonitrile-butadiene rubber, hydrogenated acrylonitrile-butadiene rubber, zinc salts of unsaturated carboxylic acid ester grafted hydrogenated acrylonitrile-butadiene rubber, natural rubber, styrene-butadiene rubber, ethylene-vinyl-acetate copolymer, ethylene methacrylate copolymers and terpolumers, chlorinated polyethylene, chlorosulfonated polyethylene, alkylated chlorosulfonated polyethylene, trans-polyoctenamer, polyacrylic rubber, and mixtures thereof.
